# EUROPÄISCHE PATENTSCHRIFT

(11) **EP 1 605 857 B1**
(45) Veröffentlichungstag und Bekanntmachung des Hinweises auf die Patenterteilung: **20.09.2006**
(21) Anmeldenummer: 04721791.4
(22) Anmeldetag: 19.03.2004
(51) Int. Cl.: A61C 5/06

(54) **MISCHKAPSEL MIT ZWANGSAKTIVIERUNG**
MIXING CAPSULE WITH FORCED ACTIVATION
CAPSULE DE MELANGE A ACTIVATION FORCEE

(30) Priorität: 21.03.2003 CH 471032003
(43) Veröffentlichungstag der Anmeldung: 21.12.2005
(73) Patentinhaber: Alfred Schmid AG Gossau, 9200 Gossau (CH)
(72) Erfinder: SCHMID, Daniel, CH-9200 Gossau (CH)
(74) Vertreter: Hasler, Erich
(86) Internationale Anmeldenummer: PCT/CH2004/000172
(87) Internationale Veröffentlichungsnummer: WO 2004/082507

(56) Entgegenhaltungen:
- EP-A- 1 219 262
- WO-A-00/45732
- US-A- 5 509 530

## Beschreibung

Die Erfindung betrifft eine Mischkapsel für eine Zweikomponentenmischung sowie ein Verfahren für deren Zwangsaktivierung.

Im Stand der Technik sind eine Vielzahl unterschiedlicher Mischkapseln bekannt, die zur Herstellung einer schnell härtbaren Masse aus mindestens zwei Ausgangskomponenten eingesetzt werden. Gemeinsames Merkmal dieser Mischkapseln ist das Vorhandensein zweier Kammern, welche der Aufbewahrung der Ausgangskomponenten einer schnell polymerisierbaren Zweikomponentenmischung dienen.

Aus der DE 43 15 920 ist beispielsweise eine Mischkapsel mit einer Mischkammer bekannt, bei welcher ein Hohlkolben schiebebeweglich in einem Behälterteil geführt ist. Im Hohlkolben wiederum ist ein Stempel schiebebeweglich angeordnet. Das Behälterteil besitzt eine Stirnseite mit einer Ausbringöffnung zum Auspressen der Mehrkomponentenmischung. Durch den bei gefüllter Mischkapsel in Abstand von der Stirnseite des Behälterteils angeordneten Hohlkolben ist eine Mischkammer definiert.

Im Ausgangszustand ist die Mischkammer vom Innenraum des Hohlkolbens durch eine auf einen Ringvorsprung des Hohlkolbens aufgeklebte Folie getrennt. Die Folie besitzt eine Sollbruchstelle, deren Haltefestigkeit geringer ist als die Festigkeit der Klebeverbindung, sodass beim Aktivieren der Kapsel durch Eindrücken des Stempels die Folie an der Sollbruchstelle reisst und die Flüssigkeit in die Mischkammer fliessen kann. Durch Verkleinern des Innenraums des Hohlkolbens mit dem Stempel wird die Flüssigkeit in die Mischkammer gedrückt. Der Stempel weist die gleiche Länge auf wie der Hohlkolben, so dass bei Erreichen der Endstellung im Hohlkolben der Stempel nicht mehr weiter verschoben werden kann, ohne den Hohlkolben mit zu verschieben. Damit der Hohlkolben beim Einpressen der Flüssigkeit in die Mischkammer durch Druck auf den Stempel nicht unbeabsichtigt in die Mischkammer hineingeschoben wird, weist der Hohlkolben eine Aussparung auf, in welche ein manuell entfernbares, U-förmiges Sperrglied eingreift, und so den Hohlkolben gegenüber dem die Mischkammer bildenden Behälterteil arretiert.

Nach dem Mischen der flüssigen mit der in der Mischkammer vorliegenden pulverförmigen Komponente mittels eines Schüttelmischers wird zum Ausbringen der erhaltenen Dentalmasse Druck auf den Stempel und den Hohlkolben zusammen ausgeübt. Dabei erfolgt eine Schiebebewegung zwischen dem Hohlkolben mit dem Stempel einerseits und der Mischkammer andererseits.

Die DE 39 20 537 C2 beschreibt eine Mehrkomponenten-Mischkapsel mit einem Behälterteil, welches eine zylindrische Mischkammer bildet. Die Mischkammer wird in axialer Richtung einerseits durch eine eine Ausspritzöffnung aufweisende Abschlusswand und andererseits durch einen Hohlkolben abgeschlossen. Der Hohlkolben ist zur Mischkammer hin mit einer Lochwand abgeschlossen. Im Innern des Hohlkolbens ist ein Stempel translatorisch verschiebbar. Der Hohlkolben und der zylindrische Mischraum bilden daher zwei ineinander geschobene becherartige Behältnisse für zwei zu mischende Komponenten, wobei die Becherränder einerseits und die Lochwand bzw. Abschlusswand andererseits beider Behältnisse gleichgerichtet sind.

Der Hohlkolben steht in der Grundstellung mit seinem Becherrand über den Becherrand des Behälterteils hinaus. Am Becherrand weist der Hohlkolben einen Vorsprung auf, über welchen auf den Hohlkolben wirkende Kräfte auf das Behälterteil abgeleitet werden. Dieser Vorsprung dient dazu, dass beim Aktivieren der Kapsel die flüssige Komponente im Hohlkolben mit dem Stempel aus dem Hohlkolben durch die Lochwand hindurch in die Mischkammer im Behälterteil gedrückt werden kann, ohne dass der Hohlkolben sich dabei relativ zum Behälterteil verschiebt.

Die flüssige Komponente liegt in einem Folienbehälter im Hohlraum des Hohlkolbens vor. Durch Druck auf dem Stempel wird die Flüssigkeit unter Druck gesetzt bis der Folienbehälter aufbricht und die Flüssigkeit durch das Loch in der Lochwand in die Mischkammer übertritt. Wenn der Stempel an der Lochwand ansteht, ist die flüssige Komponente vollständig mit der in der Mischkammer vorliegenden pulverförmigen Komponente zusammengeführt und die beiden Komponenten können nun durch Schütteln vermischt werden.

Anschliessend wird zum Ausdrücken der Dentalmasse der Stempel zusammen mit dem Hohlkolben im Behälterteil so verschoben, dass sich die Mischkammer verkleinert. Dabei wird der Vorsprung am Becherrand des Hohlkolbens umgelegt oder abgerissen. Die Mischung wird in der Folge durch die Ausspritzöffnung ausgestossen.

Aufgabe der vorliegenden Erfindung ist es, eine Mischkapsel bereitzustellen, bei welcher einerseits ein unbeabsichtigtes Aktivieren verunmöglicht, andererseits aber ein Aktivieren zwangsläufig nötig ist, damit die Mischkapsel einsetzbar ist

Die US 5,509,560 zeigt eine Mischkapsel mit einer zylindrischen Kammer zur Aufnahme einer ersten Komponente einer Mehrkomponentenmischung. Auf die Kammer aufgesetzt ist ein konzentrischer Kolben. Der Kolben besitzt eine Auflage mit einer zentralen Öffnung, auf welcher ein Kissen mit einer flüssigen zweiten Komponente der herzustellenden, aushärtbaren Mischung anordenbar ist. Auf die Kammer aufgesetzt ist eine den Kolben umschliessende Kappe mit einem inneren Verdrängerkolben. An der Aussenseite der zylindrischen Kammer ist an gegenüberliegenden Seiten je ein Zapfen angeformt. Die Zapfen wirken mit spiralförmigen Führungsbahnen zusammen, welche im Mantel der Kappe ausgebildet sind. Beim Drehen der Kappe wird der Verdrängerkolben nun - bedingt durch die stationären Zapfen und die spiralförmigen Führungsbahnen - soweit in den Kolben gedrückt, bis das im Kolben angeordnete und mit einer Flüssigkeit gefüllte Kissen platzt und die Flüssigkeit durch die vorhandene Öffnung in die zylindrische Kammer verdrängt wird.

Erfindungsgemäss ist eine Kapsel dadurch gekennzeichnet, dass
- eine mindestens einseitig offene Hülse vorgesehen ist, welche auf die Mischkapsel aufsetzbar ist,
- dass an der Hülse eine Anschlagfläche für die axial verschiebbare Aktivierungseinrichtung ausgebildet ist,
- dass an der Mischkapsel und an der Hülse mindestens eine U- oder V-förmige Führungsbahn mit einem ersten und einem zweiten Ende sowie mindestens ein Führungsorgan, z.B. ein Vorsprung oder ein Zapfen, ausgebildet ist,
- dass das erste Ende der Führungsbahn ein Zugang und das zweite Ende einen Anschlag für ein Führungsorgan definiert, und
dass das Führungsorgan in die Führungsbahn der Hülse eingreifen kann, wobei bei gefüllter Mischkapsel das Führungsorgan sich am Anschlag der Führungsbahn befindet, sodass beim Entfernen der Hülse sich diese sich in einer Aktivierungsrichtung vor und zurück bewegen muss und dabei die Aktivierungseinrichtung betätigt.

Die erfindungsgemässe Mischkapsel hat den grossen Vorteil, dass eine Aktivierung, d.h. ein Zusammenbringen der in den beiden Behältnissen aufbewahrten Ausgangskomponenten, zwangsläufig erfolgt, wenn die Hülse entfernt wird. Ausserdem hat die Mischkapsel den Vorteil, dass die Hülse als Transportsicherung fungieren kann und eine unbeabsichtigte Aktivierung verunmöglicht.

Obwohl grundsätzlich die Führungsbahn unterschiedlich und insbesondere entweder an der Hülse oder an der Mischkapsel vorgesehen sein kann, ist die Führungsbahn vorzugsweise an oder in der Hülse vorgesehen. Die Führungsbahn kann dabei als Schlitz oder Nut oder dergleichen ausgebildet sein. Eine schlitzförmige Führung ist kostengünstig herstellbar. Als mit der Führungsbahn zusammenwirkendes Führungsorgan kann am Behälterteil ein Zapfen vorgesehen oder angeformt sein. Dies ist eine kostengünstige und effiziente Ausführungsform der erfindungsgemässen Lehre, begrenzt den Erfindungsgedanken jedoch nicht auf diese Ausführungsform.

Vorzugsweise ist an gegenüberliegenden Seiten der Mischkapsel je ein Führungsorgan und an gegenüberliegenden Seiten der Hülse je eine Führungsbahn vorgesehen. Diese Ausführungsform hat en Vorteil, dass für eine gute Führung der Hülse gesorgt ist

Gemäss einer bevorzugten Ausführungsform ist in der ersten Kammer ein beweglicher Verdrängungskörper vorgesehen, welcher formschlüssig in die zweite Kammer passt. Diese Kapsel hat den Vorteil, dass mit dem Verdrängungskörper die Membran in Richtung Flüssigkeitsraum durchstossen wird und infolgedessen keine Membranteile in den Mischraum gelangen können. Weiter ist nur eine geringe Kraft erforderlich, um die Membran zu zerstören. Entsprechend sind keine Gewinde beim Behälterteil und Kolben vorzusehen. Ein weiterer Vorteil ist, dass beim Aktivierungsvorgang, d.h. wenn die in der ersten und in der zweiten Kammer gelagerten Komponenten zusammengebracht werden, das Volumen der als Mischkammer fungierenden ersten Kammer gleich bleibt und kein Überdruck entsteht. Der Verdrängungskörper verdrängt beim Aktivieren die flüssige Komponente aus der ersten Kammer. Zweckmässigerweise passt der Verdrängungskörper im wesentlichen in die Durchtrittsöffnung an der Stirnseite des Kolbens, d.h. der Aussendurchmesser des Verdrängungskörpers entspricht dem Innendurchmesser der Durchtrittsöffnung. Dies hat den Vorteil, dass bei eingeschobenem Verdrängungskörper die Membran durch diesen gehalten ist und somit keine Membranteile in den Mischraum gelangen. Vorzugsweise ist der Verdrängungskörper mittels eines die Ausspritzdüse im nicht-aktivierten Zustand verschliessenden Aktivierungsstifts verschiebbar.

Vorteilhaft hat der Verdrängungskörper eine zur ersten Kammer komplementäre Form. Dadurch kann der Verdrängungskörper die in der zweiten Kammer vorhandene Flüssigkeit in den Mischraum (erste Kammer) verdrängen. Weiterer Vorteil ist, dass die Membran durch den Verdrängungskörper in der zweiten Kammer fixiert ist. Zweckmässigerweise ist der Verdrängungskörper im aktivierten Zustand der Kapsel im wesentlichen bündig mit der Stirnseite des Kolbens in der zweiten Kammer aufgenommen. Dies hat den Vorteil, dass die fertige Mischung mit dem Kolben praktisch vollständig aus der Kapsel ausgepresst werden kann.

Obwohl die zweite Kammer grundsätzlich eine aus einer Folie gebildete Packung sein kann, ist die Flüssigkeit vorzugsweise in einer am Kolben ausgebildeten formstabilen zweiten Kammer aufgenommen. Gemäss einer besonders bevorzugten Ausführungsform ist der Kolben selbst als Hohlkolben mit Flüssigkeitsbehältnis ausgebildet resp. ein solches ist am Kolben angeformt. Dies ist eine einfache Konstruktion und entsprechend kostengünstig herstellbar. Vorteilhaft ist eine die Durchtrittsöffnung überdeckende Membran vorne auf die Stirnseite des Kolbens aufgebracht resp. aufbringbar. Da die Kolbenwand eine bestimmte Wandstärke hat, kann die Folie gut auf die Stirnseite aufgeschweisst werden. Dabei besteht praktisch keine Gefahr, dass beim Aufschweissen Flüssigkeit verdampfen könnte. Zweckmässigerweise ist vorne am Kolbenmantel wenigstens ein Dichtring angeformt. Dieser sorgt für die Abdichtung der durch die Stirnseiten des Behälterteils und des Kolbens definierten Mischkammer.

Vorteilhaft ist das Vorderteil des Verdrängungskörpers als Spitze ausgebildet. Dadurch ist es möglich, die die zweite Kammer verschliessende Folie mit geringem Kraftaufwand zu durchstossen. Gemäss einer bevorzugten Ausführungsform ist im Mantel des Verdrängungskörpers ein vorzugsweise in axialer Richtung verlaufender Überstromkanal resp. eine Rinne vorgesehen. Der Überstromkanal kann beim Einführen des Verdrängungskörpers einen Druckaufbau in der zweiten Kammer verhindern, da die Flüssigkeit gut abfliessen kann. Weiter kann der Überstromkanal so dimensioniert sein, dass auch viskose oder zähflüssige Medien aus dem Flüssigkeitsbehältnis ausbringbar sind.

Grundsätzlich kann der Aktivierungsstift direkt am Verdrängungskörper angeformt sein. In diesem Fall kann der Verdrängungskörper zusammen mit dem Aktivierungsstift von hinten in das Behälterteil eingesetzt werden. Ein Sollbruchstelle am Boden des Verdrängungskörpers erlaubt es, den Aktivierungsstift nach dem Mischvorgang, z.B. durch Drehen, vom Verdrängungskörper zu trennen und zurückzuziehen. Gemäss einer bevorzugten Ausführungsform sind jedoch Verdrängungskörper und Aktivierungsstift als separate Teile ausgebildet. Bei dieser Ausführungsform ist zweckmässigerweise am Boden des Verdrängungskörpers eine als Führung für den Aktivierungsstift dienende Vertiefung vorgesehen. Der Verdrängungskörper kann auf den Aktivierungsstift, welcher vorgängig in die Ausspritzdüse eingeführt wird, aufgesteckt werden. Zweckmässigerweise ist der Verdrängungskörper ein Vollkörper mit einem flachen Boden. Der Vollkörper kann aus Kunststoff sein und eine zum Flüssigkeitsbehältnis komplementäre Form haben. Vorteilhaft passt der Vollkörper ungefähr bündig mit der Stirnseite des Kolbens in die zweite Kammer.

Gemäss einer besonders bevorzugten Ausführungsform hat der Aktivierungsstift eine solche Länge, dass der Kolben der gefüllten Mischkapsel von einer Füllstellung um eine bestimmte Distanz in eine Mischstellung zurückschiebbar ist Durch die Vergrösserung des Volumens resultiert ein Unterdruck in der Mischkammer. Dies hat den Vorteil, dass beim Mischen eine Entgasung der Mischung stattfindet. Somit kommt es beim Ausdrücken der Mischung zu keiner Blasenbildung.

Gegenstand der vorliegenden Erfindung ist auch ein Verfahren zum Aktivieren einer wenigstens zwei Komponenten einer Mehrkomponentenmischung aufnehmenden Mischkapsel, gemäss Oberbegriff von Anspruch 22, welches Verfahren dadurch gekennzeichnet ist, dass die Hülse relativ zur Mischkapsel entlang einer U- oder V-förmigen Führungsbahn in einer Aktivierungsrichtung vor und zurück verschoben wird.

Die Erfindung wird nachfolgend beispielhaft anhand einer möglichen Ausführungsform einer Mischkapsel und unter Bezugnahme auf die Figuren erläutert. Es zeigt
- Figur 1:: eine Mischkapsel im Längsschnitt und in der Füllstellung (Ausgangszustand);
- Figur 2:: die Kapsel von Figur 1 im aktivierten Zustand (Mischstellung);
- Figur 3:: die Kapsel von Figur 2, nach dem der Aktivierungsstift zurückgezogen ist (Auspressstellung);
- Figur 4:: ein konisches Aktivierungsteil;
- Fig. 5:: eine zweite Ausführungsform einer Mischkapsel mit einem Aktivierungsteil, welches am Behälterboden fixierbar ist; und
- Fig. 6:: in perspektivischer Ansicht eine Ausführungsform des Verdrängungskörpers mit ringförmigen Vorsprüngen am Boden;
- Fig. 7:: eine erste Ausführungsform einer erfindungsgemässen Zwangsaktivierungseinrichtung in Gestalt einer auf die Mischkapsel aufsetzbaren Hülse mit einer schlitzartigen Führungsbahn und einem an der Mischkapsel vorgesehenen Zapfen in perspektivischer Ansicht;
- Fig. 8: die Hülse der ersten Ausführungsform in perspektivischer Ansicht;
- Fig. 9:: eine zweite Ausführungsform einer erfindungsgemässen Zwangsaktivierungseinrichtung mit einer als Nut ausgeführten Führungsbahn in perspektivischer Ansicht;
- Fig. 10:: eine erfindungsgemässe Mischkapsel gemäss den Figuren 1 bis 6 mit der Zwangsaktivierungseinrichtung in der Ausgangsstellung;
- Fig. 11:: die Mischkapsel von Fig. 9 mit der Zwangsaktivierungseinrichtung in der Aktivierungsstellung;

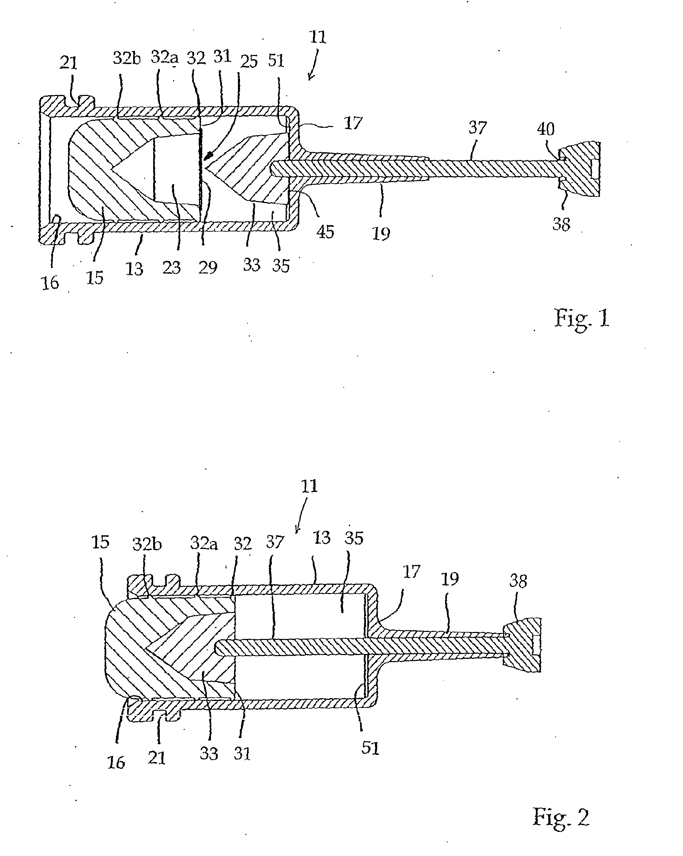

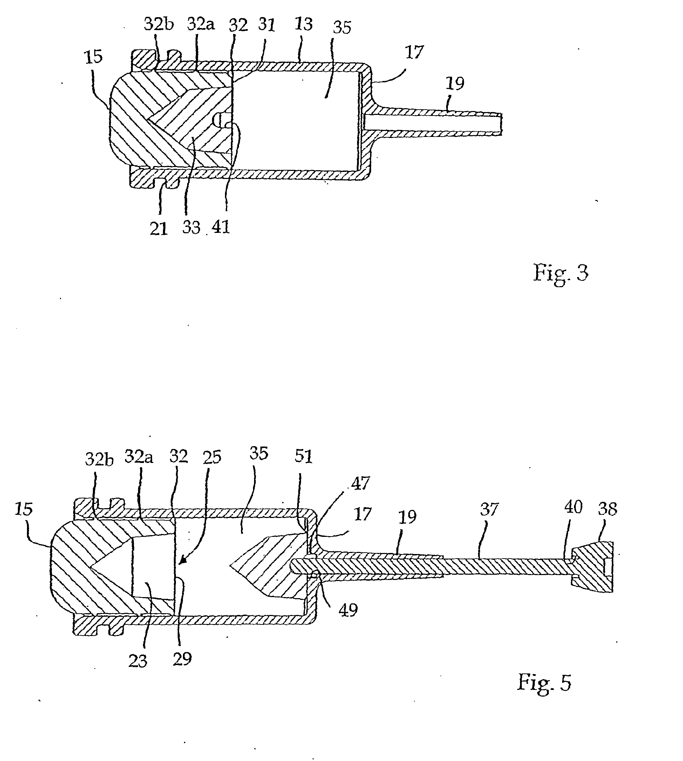

Die Figuren 1 bis 4 zeigen eine Mischkapsel 11 mit einem äusseren Behälterteil 13 und einem im Behälterteil 13 aufgenommenen Kolben 15. Der Kolben 15 ist im Behälterteil 13 axial verschiebbar und befindet sich in Figur 1 in der Ausgangsposition oder Füllstellung, und in Figur 2 in der Mischstellung (aktivierter Zustand der Kapsel). Das Behälterteil 13 ist zylindrisch und hat eine Öffnung 16 zum Einführen des Kolbens 15 und eine Stirnseite 17, an welcher eine Ausspritzdüse 19 angeformt ist. Bei zusammengesetzter Mischkapsel ist zwischen dem Kolben 15 und der Stirnseite des Behältnisses 13 eine erste Kammer 35 definiert, welche als Mischraum dient. Am hinteren Ende des Behälterteils 13 ist aussen eine Ringnut 21 vorgesehen. Die Ringnut 21 dient der Aufnahme einer Backe eines bekannten Auspresswerkzeugs.

Am oder im Kolben 15 ist eine zweite Kammer 23 vorgesehen. Gemäss der gezeigten vorteilhaften Ausführungsform hat der Kolben 15 die Gestalt eines konischen, pyramidalen oder zylindrischen Bechers oder Hohlraums mit einer zur Stirnseite 17 orientierten Öffnung 25 und einem Innenraum 27. Der Innenraum 27 dient der Aufnahme der flüssigen oder zumindest fliessfähigen Komponente eines Zweikomponentenharzes und dient als formstabiles Flüssigkeitsbehältnis. Im nicht-aktivierten Zustand ist die Durchtrittsöffnung 25 mit einer Folie oder Membran 29 verschlossen. Die Folie kann in bekannter Art auf die Stirnseite 31 des Kolbens 15 aufgeschweisst sein. Zur Abdichtung des Kolbens 15 gegen das Behälterteil 13 sind am Kolbenmantel eine oder mehrere Ringdichttungen 32 angeformt. Die erste Dichtung 32 befindet sich am vordersten Kolbenrand. Zwei weitere Dichtungen 32a, 32b befinden in Abstand zur ersten Dichtung 32.

Ein Verdrängungskörper 33 ist in den Mischraum 35 zwischen der Stirnseite des Kolbens 15 und der Stirnseite des Behälterteils 13 eingelegt. Der Verdrängungskörper 33 hat eine zum Innenraum 27 des Kolbens 15 komplementäre Gestalt. Der Verdrängungskörper 33 ist mittels eines Aktivierungsstiftes 37, welcher vor der Aktivierung der Mischkapsel in der Ausspritzdüse 19 aufgenommen ist, im Behälterteil 13 axial verschiebbar. Die Länge des Aktivierungsstifts 37 ist wenigstens so lang, dass der Verdrängungskörper 33 vollständig in die zweite Kammer 23 eingeschoben werden kann. Der Aktivierungsstift 37 hat einen Kopf 38, welcher als Anschlag dient. Der Kopf 38 hat eine Hinterschneidung 40, in welcher der vordere Rand der Ausspritzdüse bei vollständig eingeschobenem Aktivierungsstift 37 aufgenommen ist.

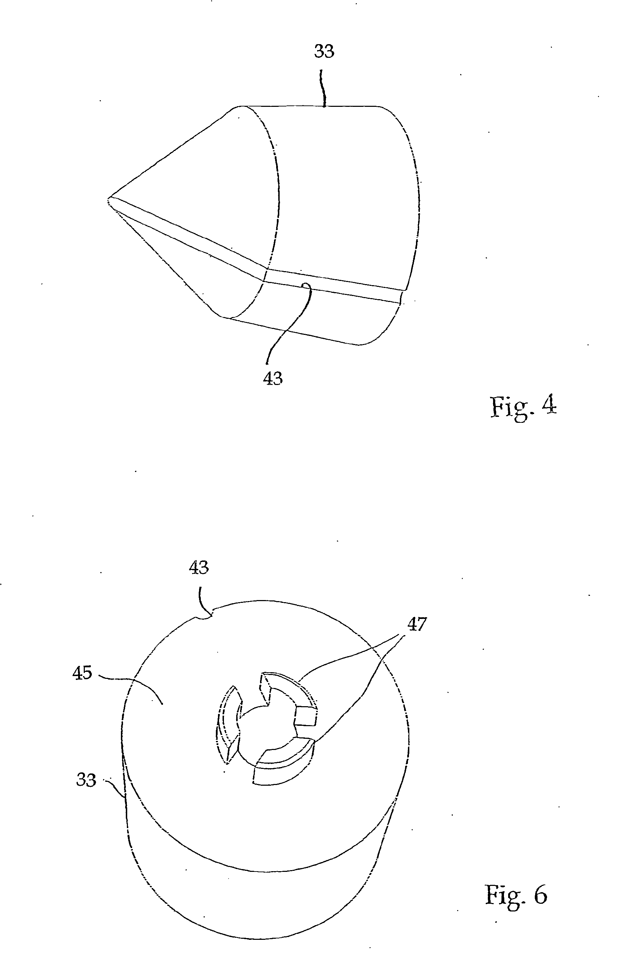

Der Verdrängungskörper 33 besitzt am Boden 45 eine runde Vertiefung 41. Die Vertiefung 41 dient der Aufnahme des Vorderteils des Aktivierungsstifts 37. Vorteilhaft sind Vorderteil des Aktivierungsstifts 37 und Vertiefung 41 so geschaffen, dass ein Reibschluss realisiert ist. Dadurch ist der Verdrängungskörper 33 im Mischraum der nicht-aktivierten Kapsel 11 fixiert. Denkbar ist jedoch auch, dass der Verdrängungskörper 33 mit radial abstehenden Armen ausgestattet ist, sodass er im Behälterteil 13 geführt ist. Um einen ungehinderten Fluss der in der zweiten Kammer vorhandenen Flüssigkeit in den Mischraum 35 zu gewährleisten, ist im Mantel des Verdrängungskörpers ein Überstromkanal 43 vorgesehen (Fig. 4).

Eine modifizierte Ausführungsform des Verdrängtmgskörpers 33 sieht vor, dass am Boden 45 desselben Mittel vorgesehen sind, um der Verdrängungskörper 33 am Behälterteil 13 lösbar zu fixieren. Diese Mittel können - wie in den Fig.5 und 6 gezeigt - ringförmige Vorsprünge 47 sein, welche in einer Ringnut 49 am Behälterboden 51 einrasten können. Die Ringnut 49 ist an der Durchtrittsöffnung der Ausspritzdüse 19 vorgesehen. Die gezeigte Ausführungsform hat den Vorteil, dass beim Befüllen der Kapsel der Verdrängungskörper zuerst in das Behälterteil 13 eingesetzt werden kann und dass dann ein ungewolltes Herausfallen oder Verrutschen durch die Reibschlussverbindung zwischen Ringnut 49 und Vorsprüngen 47 verhindert ist.

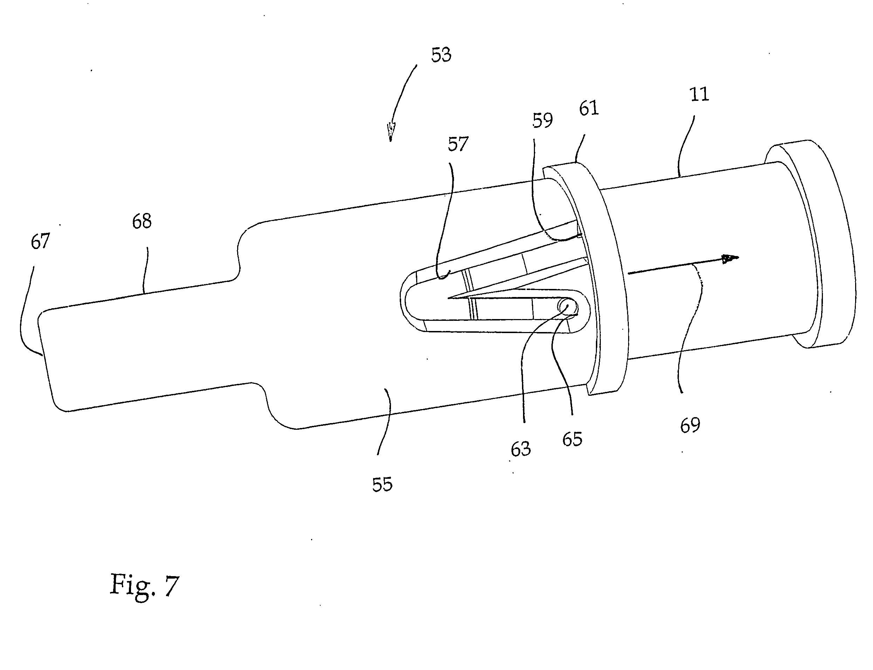

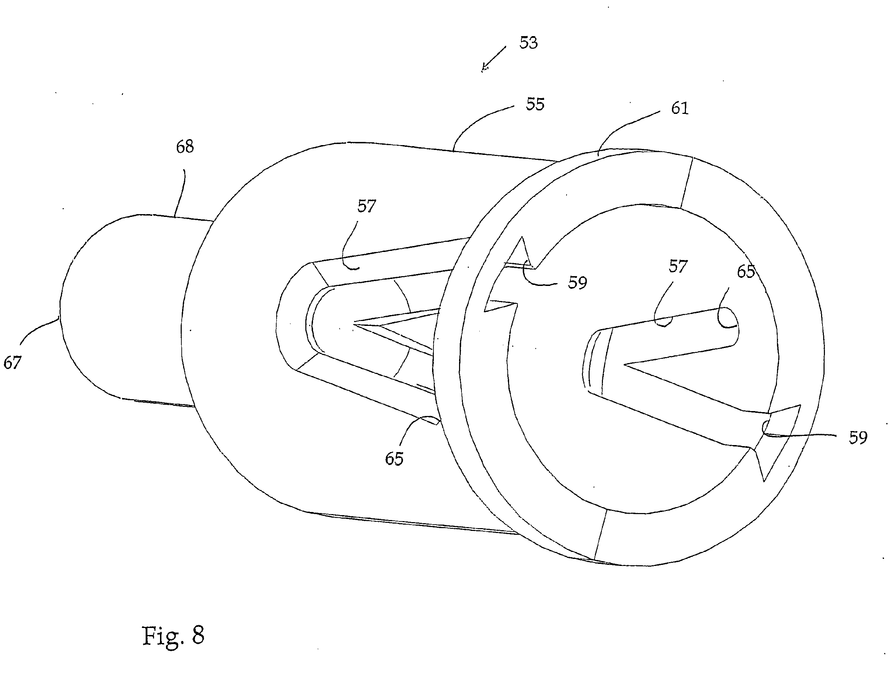

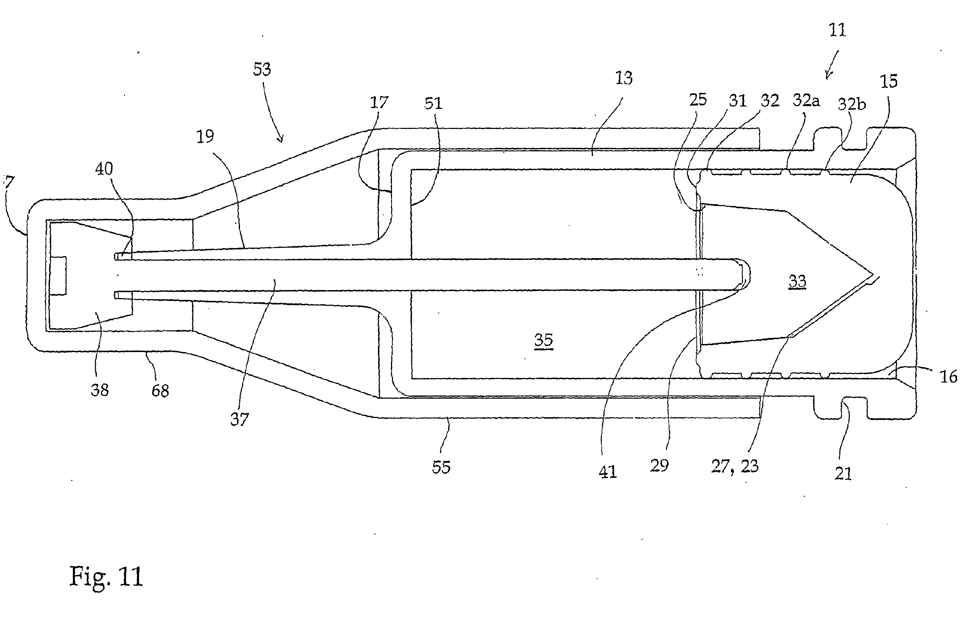

Erfindungsgemäss ist eine Zwangsaktivierungseinrichtung vorgesehen, welche sicherstellt, dass die Mischkapsel ohne eine vorgängige Aktivierung nicht einsetzbar ist. Die Zwangsaktivierungseinrichtung umfasst vorzugsweise eine zylindrische Hülse 53, welche auf die Mischkapsel 11 aufsetzbar ist (Figuren 7 bis 11). Am Mantel 55 der Hülse 53 sind V-förmige Führungsbahnen 57 vorgesehen. Die Führungsbahnen 57 besitzen je ein erstes offenes Ende 59 am Rand 61 der Hülse, durch welches ein an der Mischkapsel 11 angeformtes Führungsorgan 63 einführbar ist, und ein zweite Ende 65, welches als Anschlag für das Führungsorgan 63 dient (Fig. 7 und 8). Die Hülse 53 besitzt am vorderen Ende eine Anschlagfläche 67, welche mit dem aus der Ausspritzdüse ragenden Ende des Aktivierungsstiftes 37 zusammenwirken kann. Die Hülse kann wie dies in den Figuren 7 bis 11 gezeigt ist, vorne zu einer Spitze 68 verjüngt sein.

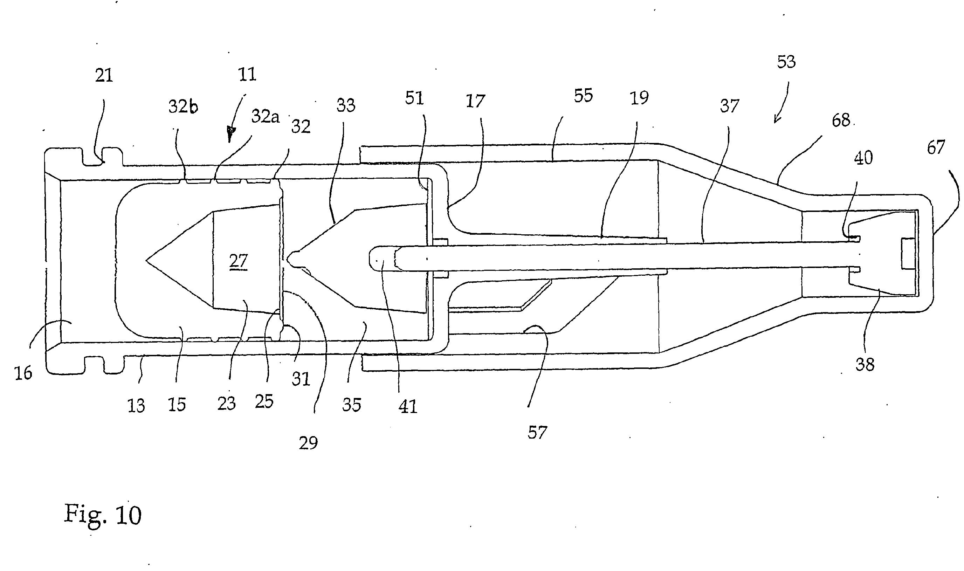

In der in den Fig. 7 und 10 gezeigten Ausgangs- oder Transportstellung der Aktivierungseinrichtung befindet sich das als Zapfen ausgebildete Führungsorgan 63 am zweiten Ende 65 der Führungsbahn 57. Zum Entfernen der Hülse 53 muss diese zuerst in Aktivierungsrichtung (Pfeil 69) vor und dann zurück verschoben werden, wie dies durch den Verlauf der Führungsbahn vorgegeben ist. Dabei wird der in der Ausspritzdüse 19 angeordnete Aktivierungsstift 37 in die Mischkapsel geschoben. Beim Verschieben wird der am Aktivierungsstift 37 anliegende Verdrängungskörper 33 in die zweite Kammer 23 gedrückt wird. Bei dieser Aktion wird die in der zweiten Kammer 23 sich befindliche fliessfähige Masse in die erste Kammer 35 verdrängt.

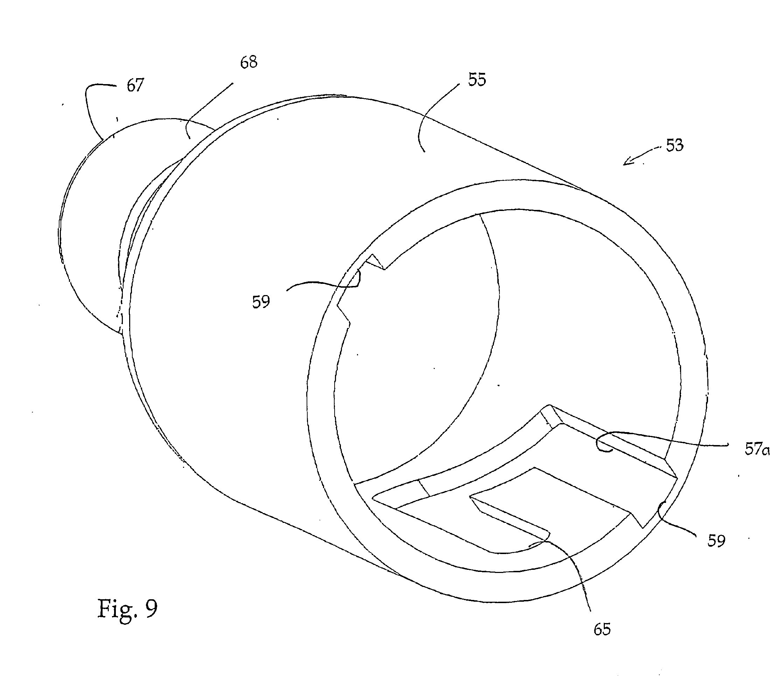

Die in Figur 9 gezeigte Hülse besitzt im Unterschied zur Hülse der Figur 8 eine U-förmige Führungsbahn 57a. Ausserdem ist die Führungsbahn 57a nicht als Schlitz, sondern als Nut ausgeführt.

Die erfindungsgemässe Mischkapsel wird wie folgt vorbereitet und eingesetzt:
Das Verdrängungsteil 33 wird zunächst in das Behälterteil 13 eingelegt und der Aktivierungsstift 37 durch die Ausspritzdüse 19 eingeführt. Danach wird die Hülse 53 auf die Mischkapsel 11 aufgesetzt und in die Ausgangsstellung gebracht, d.h. der Zapfen 63 befindet sich am zweiten Ende 65 der Führungsbahn 57. Anschliessend wird der Verdrängungskörpers 33 in das Behälterteil 13 eingelegt derart, dass das Vorderteil des Aktivierungsstift 37 in der Vertiefung 41 aufgenommen. Danach kann die eine Kunstharzkomponente (pulverförmig oder flüssig) in das senkrecht ausgerichtete Behälterteil 13 eingefüllt werden.

Der Kolben 15, in welchem das Flüssigkeitsbehältnis 23 ausgebildet ist, wird in einer separaten Operation mit der gewünschten Flüssigkeit oder fliessfähigen Masse gefüllt und mit einer Membran dicht verschlossen. Diese Vorgänge können automatisiert ablaufen. Die Befüllung des Kolbens 15 durch die Durchtrittsöffnung 25 und die Verschweissung der Folie mit dem Kolbenrand mittels eines heissen Stempels sind von oben einfach zu bewerkstelligen.

Anschliessend wird der Kolben 15 in das Behälterteil 13 eingesetzt. Um einen Druckaufbau in der Mischkammer zu verhindern, kann zwischen Behälterwand und Kolben 15 ein Draht eingelegt sein, um beim Einrühren des Kolbens Luft aus dem Mischkammer an die Umgebung abzulassen. Danach kann der Draht wieder entfernt werden. Die Position des Kolbens 15 im Behälterteil 13 ist vorzugsweise so gewählt, dass der Kolben 15 der gefüllten Mischkapsel von einer Ausgangsstellung (Fig. 1) noch eine bestimmte Distanz nach hinten in eine Mischstellung (Fig. 2) verschiebbar ist.

Zur Herstellung der Mehrkomponentenmischung ist es nötig, zuerst die Hülse 53 zu entfernen. Dies geschieht durch nach vorne und zurück Schieben sowie Drehen der Hülse relativ zur Mischkapsel. Bei diesem Vorgang wird der Verdrängungskörper 33 durch den Aktivierungsstift 37 zunächst in die zweite Kammer 23 gestossen. Dabei durchstösst der spitze Verdrängungskörper 33 die Folie 29 in der Mitte und presst die in der zweiten Kammer 23 vorhandene flüssige Kunstharzkomponente in den Mischraum 35. Bei entsprechender Länge des Aktivierungsstiftes kann der ganze Kolben 15 zudem in eine Mischstellung verschoben werden. In der dann eingenommenen Mischstellung wird die Kapsel 11 in einem bekannten Schüttelapparat während einer bestimmten Zeitspanne geschüttelt. Der Aktivierungsstift 37 wird danach herausgezogen, und die fertige, viskose Kunstharzmischung mit einer bekannten Auspresspistole ausgedrückt.

Eine Mischkapsel für eine Zweikomponentenmischung besitzt einen vorzugsweise zylindrischen Behälterteil 13 mit einer an der Stirnseite angeformten Ausspritzdüse 19. Ein Kolben ist im Behälterteil axial verschiebbar geführt. In der Stirnseite des Kolbens ist eine Durchtrittsöffnung vorgesehen, an welche ein Flüssigkeitsbehältnis anschliesst. Im nicht-aktivierten Zustand der Kapsel verschliesst eine Membran die Durchtrittsöffnung. Der Hohlraum zwischen der Stirnseite des Behälterteils und der Stirnseite des Kolbens bildet einen Mischraum. Im Mischraum ist ein bewegliches Verdrängungskörper vorgesehen. Der Verdrängungskörper ist mittels eines die Ausspritzdüse im nicht-aktivierten Zustand verschliessenden Aktivierungsstifts verschiebbar. Damit die Mischkapsel nicht unbeabsichtigt aktiviert werden kann, jedoch bei Gebrauch aktiviert werden muss, ist eine Zwangsaktivierungseinrichtung vorgesehen. Die Einrichtung besteht in einer auf die Mischkapsel aufsetzbaren Hülse, welche beim Abziehen für eine Aktivierung der Mischkapsel sorgt. Zu diesem Zweck ist an der Hülse und der Mischkapsel mindestens je eine U- oder V-förmige Führungsbahn und ein in die Führungsbahn eingreifendes Führungsorgan ausgebildet, sodass die Hülse 53 zum Aufsetzen auf die Mischkapsel oder bei deren Entfernung entlang der Führungsbahn 57,57a in Aktivierungsrichtung 69 verschoben werden muss.

### Legende:

- 11: Mischkapsel
- 13: Behälterteil
- 15: Kolben
- 16: Öffnung im Behälterteil 13 zum Einführen des Kolbens 15
- 17: Stirnseite des Behälterteils
- 19: Ausspritzdüse
- 21: Ringnut
- 23: zweite Kammer (Flüssigkeitsbehältnis)
- 25: Durchtrittsöffnung (Durchgangsöffnung)
- 27: Innenraum
- 29: Folie oder Membran
- 31: Stirnseite des Kolbens
- 32: Dichtring oder Dichtwulst
- 32a,32b: zweiter und dritter Dichtring oder Dichtwulst
- 33: Verdrängungskörper
- 35: erste Kammer (Mischraum)
- 37: Aktivierungsstift
- 38: Kopf des Aktivierungsstiftes
- 40: Hinterschneidung am Kopf 38
- 41: Vertiefung
- 43: Überstromkanal
- 45: Boden des Verdrängungskörpers 33
- 47: Vorsprünge, z.B. ringförmige
- 49: Ringnut 49
- 51: Behälterboden
- 53: Hülse
- 55: Mantel
- 57: Führungsbahnen
- 59: erstes offenes Ende der Führungsbahnen
- 61: Rand
- 63: Führungsorgan
- 65: zweite Ende der Führungsbahnen
- 67: Anschlagfläche
- 68: verjüngtes vorderes Ende der Hülse 53
- 69: Aktivierungsrichtung (Pfeil)

## Patentansprüche

1. Mischkapsel für eine Zweikomponentenmischung mit
- einem vorzugsweise zylindrischen Behälterteil (13) mit einer Stirnseite (17) mit einer Ausspritzdüse (19), und
mit einer der Stirnseite gegenüberliegenden offenen Rückseite mit einer Öffnung (16) zum Einsetzen eines beweglichen Kolbens,
- mindestens einem im Behälterteil (13) axial beweglichen Kolben (15), wobei zwischen der Stirnseite des Behälterteils (13) und dem Kolben eine erste Kammer definiert ist, welcher der Aufnahme einer ersten, vorzugsweise pulverförmigen, Komponente eines Mehrkomponentengemisches dient;
- einem am oder im Kolben (15) angeordneten zweiten Kammer zur Aufnahme einer zweiten, vorzugsweise flüssigen oder zumindest fliessfähigen Komponente, des erwähnten Mehrkomponentengemisches,
- einer im Ausgangszustand verschlossenen Durchtrittsöffnung zwischen der ersten und der zweiten Kammer, sowie
- einer axial verschiebbaren Aktivierungseinrichtung, um den anfänglich geschlossenen Durchgang zwischen dem ersten und zweiten Behältnis zu öffnen und den Inhalt des einen Behältnisses in das andere Behältnis zu transferieren,
- wobei eine mindestens einseitig offene Hülse vorgesehen ist, welche auf die Mischkapsel aufsetzbar ist,
- wobei an der Hülse eine Anschlagfläche für die axial verschiebbare Aktivierungseinrichtung ist,
- wobei an der Mischkapsel und an der Hülse mindestens eine Führungsbahn mit einem ersten und einem zweiten Ende sowie mindestens ein Führungsorgan, z.B. ein Vorsprung oder ein Zapfen, ausgebildet ist,
- wobei das erste Ende der Führungsbahn ein Zugang und das zweite Ende einen Anschlag für ein Führungsorgan definiert, weiter **dadurch gekennzeichnet, dass** die Führungsbahn eine U-oder V-förmige Führungsbahn ist, und dass das Führungsorgan in die Führungsbahn der Hülse eingreifen kann, wobei bei gefüllter Mischkapsel das Führungsorgan sich am Anschlag der Führungsbahn befindet, sodass beim Entfernen der Hülse sich diese sich in einer Aktivierungsrichtung (69) vor und zurück bewegen muss und dabei die Aktivierungseinrichtung (37,33) betätigt.

2. Mischkapsel nach Anspruch 1, **dadurch gekennzeichnet, dass** die Führungsbahn (57) an der Hülse (53) und das Führungsorgan (63) an der Mischkapsel (11) ausgebildet ist.

3. Mischkapsel nach Anspruch 1 oder 2, **dadurch gekennzeichnet, dass** die Führungsbahn ein Schlitz (57) oder eine Nut (57a) ist.

4. Mischkapsel nach einem der Ansprüche 1 bis 3, **dadurch gekennzeichnet, dass** das Führungsorgan ein am Behälterteil (13) ausgebildeter Zapfen (63) ist.

5. Mischkapsel nach einem der Ansprüche 1 bis 4, **dadurch gekennzeichnet, dass** an gegenüberliegenden Seiten der Mischkapsel (11) je ein Führungsorgan (63) und an gegenüberliegenden Seiten der Hülse (53) je eine Führungsbahn (57) vorgesehen ist.

6. Mischkapsel nach einem der Ansprüche 1 bis 5, **dadurch gekennzeichnet, dass** in der ersten Kammer (35) ein beweglicher Verdrängungskörper (33) vorgesehen ist, welcher formschlüssig in die zweite Kammer (23) passt.

7. Mischkapsel nach einem der Ansprüche 1 bis 6, **dadurch gekennzeichnet, dass** der Verdrängungskörper (33) im wesentlichen einen dem Durchgang (25) entsprechenden Durchmesser hat.

8. Mischkapsel nach einem der Ansprüche 1 bis 7, **dadurch gekennzeichnet, dass** der Verdrängungskörper (33) eine zur zweiten Kammer (23) komplementäre Form hat.

9. Mischkapsel nach einem der Ansprüche 1 bis 8, **dadurch gekennzeichnet dass** der Verdrängungskörper (33) im aktivierten Zustand der Kapsel (11) im wesentlichen bündig mit der Stirnseite (31) des Kolbens (15) in der zweiten Kammer (23) aufgenommen ist.

10. Mischkapsel nach einem der Ansprüche 1 bis 9, **dadurch gekennzeichnet dass** im Kolben (15) die zweite Kammer (23) ausgebildet ist.

11. Mischkapsel nach einem der Ansprüche 1 bis 10, **dadurch gekennzeichnet, dass** eine den Durchgang (25) überdeckende Membran (29) vorne auf die Stirnseite (31) des Kolbens (15) aufgebracht ist.

12. Mischkapsel nach Anspruch 11, **dadurch gekennzeichnet, dass** die Membran (29) auf den Kolben (15) aufgeschweisst ist.

13. Mischkapsel nach einem der Ansprüche 1 bis 12, **dadurch gekennzeichnet dass** am Kolbenmantel wenigstens ein Dichtring oder Dichtwulst (32) angeformt ist.

14. Mischkapsel nach einem der Ansprüche 1 bis 13, **dadurch gekennzeichnet dass** das Vorderteil des Verdrängungskörpers (33) zu einer Spitze zulaufend ist.

15. Mischkapsel nach einem der Ansprüche 1 bis 14, **dadurch gekennzeichnet, dass** im Mantel des Verdrängungskörpers (33) mindestens ein in axialer Richtung verlaufender Überstromkanal (43) vorgesehen ist.

16. Mischkapsel nach einem der Ansprüche 1 bis 15, **dadurch gekennzeichnet, dass** die Aktivierungseinrichtung ein in die Ausspritzdüse (19) passender Aktivierungsstift (37) einer solchen Länge ist, dass der Verdrängungskörper (33) in die zweite Kammer (23) verschiebbar ist.

17. Mischkapsel nach Anspruch 16, **dadurch gekennzeichnet, dass** der Verdrängungskörper (33) integral mit dem Aktivierungsstift (37) ist.

18. Mischkapsel nach Anspruch 16 oder 17, **dadurch gekennzeichnet, dass** zwischen dem Verdrängungskörper (33) und dem Aktivierungsstift (37) eine Sollbruchstelle vorgesehen ist.

19. Mischkapsel nach einem der Ansprüche 1 bis 18, **dadurch gekennzeichnet, dass** am Boden (45) des Verdrängungskörpers (33) eine als Führung für den Aktivierungsstift (37) dienende Vertiefung (41) vorgesehen ist.

20. Mischkapsel nach einem der Ansprüche 1 bis 19 **dadurch gekennzeichnet, dass** der Verdrängungskörper (33) ein Hohl- oder Vollkörper mit einem flachen Boden (45) ist.

21. Mischkapsel nach einem der Ansprüche 1 bis 20, **dadurch gekennzeichnet, dass** die Aktivierungseinrichtung ein weiterer Kolben ist, welcher im Kolben (15) in axialer Richtung verschiebbar ist.

22. Verfahren zum Aktivieren einer wenigstens zwei Komponenten einer Mehrkomponentenmischung aufnehmenden Mischkapsel (11), bei welchem Verfahren eine in einer ersten Kammer (35) aufbewahrte erste Komponente einer Mehrkomponentenmischung mit einer zweiten Komponente der Mehrkomponentenmischung durch Verschieben eines Aktivierungsteils (33) zusammengebracht wird, wobei
an der Mischkapsel (11) eine mit dem Aktivierungsteil (33) zusammenwirkende Hülse (53) angeordnet wird, welche so an der Mischkapsel (11) beweglich geführt ist, dass bei der Entfernung der Hülse (53) das Aktivierungsteil (33) zwangsläufig verschoben wird;
**dadurch gekennzeichnet,**
**dass** die Hülse (53) relativ zur Mischkapsel (11) entlang einer U- oder V-förmigen Führungsbahn (57) in einer Aktivierungsrichtung (69) vor und zurück verschoben werden muss.

## Claims

1. A mixing capsule for a two-component mixture with
- a preferably cylindrical container part (13) with an end-face (17) with an ejection nozzle (19), and
with an open rear side lying opposite the end-face, with an opening (16) for inserting a movable piston,
- at least one piston (15) which is axially movable in the container part (13), wherein a first chamber is defined between the end-face of the container part (13) and the piston, said chamber serving for receiving a first, preferably powder-like component of a multi-component mixture;
- a second chamber arranged on or in the piston (15) for receiving a second, preferably fluid or at least flowable component of the mentioned multi-component mixture,
- a through-opening between the first and the second chamber which is closed in the initial condition, as well as
- an axially displaceable activation means in order to open the initially closed passage between the first and the second receptacle and to transfer the contents of the one receptacle into the other receptacle,
- a sleeve open at least on one side is provided which may be placed onto the mixing capsule,
- an abutment surface for the axially displaceable activation means is provided on the sleeve,
- that at least one guide path with a first and a second end as well as at least one guide element, e.g. a projection or protrusion is formed on the mixing capsule and on the sleeve,
- that the first end of the guide path defines an access, and the second end an abutment for a guide element, and further **characterized in that**
- the guide path is a U- or V-shaped guide path and that the guide element may engage into the guide path of the sleeve, wherein the guide element is located on the abutment of the guide path when the mixing capsule is filled, so that on removal of the sleeve, this must move in an activation direction forwards and back, and thereby actuates the activation means (37, 33).

2. A mixing capsule according to claim 1, **characterised in that** the guide path (57) is formed on the sleeve (53), and the guide element (63) on the mixing capsule (11).

3. A mixing capsule according to claim 1 or 2, **characterised in that** the guide path is a slot (57) or a groove (57a).

4. A mixing capsule according to one of the claims 1 to 3, **characterised in that** the guide element is a projection (63) formed on the container part (13).

5. A mixing capsule according to one of the claims 1 to 4, **characterised in that** in each case one guide element (63) is provided on oppositely lying sides of the mixing capsule (11), and in each case one guide path (57) on oppositely lying sides of the sleeve (53).

6. A mixing capsule according to one of the claims 1 to 5, **characterised in that** a movable displacement body (33) is provided in the first chamber (35) which fits into the second chamber (23) with a positive fit.

7. A mixing capsule according to one of the claims 1 to 6, **characterised in that** the displacement body (33) has a diameter corresponding essentially to the passage (25).

8. A mixing capsule according to one of the claims 1 to 7, **characterised in that** the displacement body (33) has a shape which is complementary to the second chamber (23).

9. A mixing capsule according to one of the claims 1 to 8, **characterised in that** displacement body (33) in the activated condition of the capsule (11) is accommodated essentially flush with the end-face (31) of the piston (15) in the second chamber (23).

10. A mixing capsule according to one of the claims 1 to 9, **characterised in that** the second chamber (23) is formed in the piston (15).

11. A mixing capsule according to one of the claims 1 to 10, **characterised in that** a membrane (29) covering over the passage (25) is deposited at the front onto the end-face (31) of the piston (15).

12. A mixing capsule according to claim 11, **characterised in that** the membrane (29) is welded onto the piston (15).

13. A mixing capsule according to one of the claims 1 to 12, **characterised in that** at least one sealing ring or sealing bead (32) is integrally formed on the piston casing.

14. A mixing capsule according to one of the claims 1 to 13, **characterised in that** the front part of the displacement body (33) tapers into a point.

15. A mixing capsule according to one of the claims 1 to 14, **characterised in that** at least one overflow channel (43) running in the axial direction is provided in the casing of the displacement body (33).

16. A mixing capsule according to one of the clams 1 to 15, **characterised in that** the activation means is an activation pin (37) which fits into the ejection nozzle (19) and is of such a length that the displacement body (33) may be displaced into the second chamber (23).

17. A mixing capsule according to claim 16, **characterised in that** the displacement body (33) is integral with the activation pin (37).

18. A mixing capsule according to claim 16 or 17, **characterised in that** a predetermined break location is provided between the displacement body (33) and the activation pin (37).

19. A mixing capsule according to one of the claims 1 to 18, **characterised in that** a recess (41) is provided on the base (45) of the displacement body (33) as a guide for the activation pin (37).

20. A mixing capsule according to one of the claims 1 to 19, **characterised in that** the displacement body (33) is a hollow or solid body with a flat base (45).

21. A mixing capsule according to one of the claims 1 to 20, **characterised in that** the activation means is a further piston which is displaceable in the piston (15) in the axial direction.

22. A method for activating a mixing capsule (11) accommodating at least two components of a multi-component mixture, with which method a first component of a multi-component mixture stored in a first chamber (35) is brought together with a second component of the multi-component mixture by way of displacing an activation part (33),
wherein a sleeve (53) cooperating with the activation part (33) is arranged on the mixing capsule (11), and this sleeve is guided on the mixing capsule (11) in a movable manner such that on removal of the sleeve (53), the activation part (33) is forcibly displaced **characterised in that** the sleeve (53) must be displaced relative to the mixing capsule (11) along a U- or V-shaped guide path (57) in an activation direction (69) forwards and back.

## Revendications

1. Capsule de mélange pour un mélange à deux constituants avec
- une partie réservoir (13) de préference cylindrique avec un côté frontal (17) avec une tuyère de pulvérisation (19) et avec un côté arrière ouvert opposé au côté frontal avec une ouverture (16) pour mettre en place un piston mobile,
- au moins un piston mobile axialement (15) dans la partie réservoir (13), une première chambre étant définie entre le côté frontal de la partie réservoir (13) et le piston, le piston servant à recevoir un premier constituant de préférence sous forme de poudre d'un mélange à plusieurs constituants,
- une seconde chambre placée sur ou dans le piston (15) pour recevoir un second constiutant, de préférence liquide ou tout au moins fluide, du mélange à plusieurs constituants mentionné,
- une ouverture de passage entre la première et la seconde chambre qui est fermée à l'état de sortie ainsi
- qu'avec un dispositif d'activation translatable axialement pour ouvrir le passage fermé initialement entre le premier et le second réservoir et pour transférer le contenu de l'un des réservoirs dans l'autre réservoir,
- une douille ouverte au moins d'un côté étant prévue qui peut être placée sur la capsule de mélange,
- une surface de butée pour le dispositif d'activation mobile axialement étant sur la douille,
- au moins une glissière de guidage avec une première et une seconde extrémité ainsi qu'au moins un organe de guidage, par exemple une saillie ou un tourillon, étant configuré sur la capsule de mélange et sur la douille,
- la première extrémité de la glissière de guidage définissant un accès et la seconde extrémité une butée pour l'organe de guidage, **caractérisée de plus en ce que** la glissière de guidage est une glissière de guidage en forme d'U ou de V et que l'organe de guidage peut s'engrener dans la glissière de guidage de la douille, l'organe de guidage se trouvant sur la butée de la glissière de guidage lorsque la capsule de mélange est remplie si bien que, lorsque l'on enlève la douille, celle-ci doit se déplacer en avant et en arrière dans un dispositif d'activation (69) et actionner ainsi le dispositif d'activation (37, 33).

2. Capsule de mélange selon la revendication 1, **caractérisée en ce que** la glissière de guidage (57) est configurée sur la douille (53) et l'organe de guidage (63) sur la capsule de mélange (11).

3. Capsule de mélange selon la revendication 1 ou 2, **caractérisée en ce que** la glissière de guidage est une fente (57) ou une rainure (57a).

4. Capsule de mélange selon l'une des revendications 1 à 3, **caractérisée en ce que** l'organe de guidage est un tourillon (63) configuré sur la partie réservoir (13).

5. Capsule de mélange selon l'une des revendications 1 à 4, **caractérisée en ce que** respectivement un organe de guidage (63) est prévu sur chacun des côtés opposés de la capsule de mélange (11) et une glissière de guidage (57) sur chacun des côtés opposés de la douille (53).

6. Capsule de mélange selon l'une des revendications 1 à 5, **caractérisée en ce qu'**il est prévu un corps de refoulement mobile (33) dans la première chambre (35), corps de refoulement qui s'insère de manière crabotée dans la seconde chambre (23).

7. Capsule de mélange selon l'une des revendications 1 à 6, **caractérisée en ce que** le corps de refoulement (33) a substantiellement un diamètre qui correspond au passage (25).

8. Capsule de mélange selon l'une des revendications 1 à 7, **caractérisée en ce que** le corps de refoulement (33) a une forme complémentaire à celle de la seconde chambre (23).

9. Capsule de mélange selon l'une des revendications 1 à 8, **caractérisée en ce que** le corps de refoulement (33) est logé, lorsque la capsule (11) est à l'état activé, substantiellement à fleur avec le côté frontal (31) du piston (15) dans la seconde chambre (23).

10. Capsule de mélange selon l'une des revendications 1 à 9, **caractérisée en ce que** la seconde chambre (23) est configurée dans le piston (15).

11. Capsule de mélange selon l'une des revendications 1 à 10, **caractérisée en ce qu'**une membrane (29) qui recouvre le passage (25) est montée devant sur le côté frontal (31) du piston (15).

12. Capsule de mélange selon la revendication 11, **caractérisée en ce que** la membrane (29) est soudée sur le piston (15).

13. Capsule de mélange selon l'une des revendications 1 à 12, **caractérisée en ce qu'**au moins un anneau d'étanchéité ou un bourrelet d'étanchéité (32) est moulé sur la jupe du piston.

14. Capsule de mélange selon l'une des revendications 1 à 13, **caractérisée en ce que** la partie antérieure du corps de refoulement (33) s'effile en pointe.

15. Capsule de mélange selon l'une des revendications 1 à 14, **caractérisée en ce qu'**au moins un conduit de trop-plein (43) dans le sens axial est prévu dans l'enveloppe du corps de refoulement (33).

16. Capsule de mélange selon l'une des revendications 1 à 15, **caractérisée en ce que** le dispositif d'activation est une broche d'activation (37) qui s'insère dans la tuyère de pulvérisation (19), broche qui est d'une telle longueur que le corps de refoulement (33) est translatable dans la seconde chambre (23).

17. Capsule de mélange selon la revendication 16, **caractérisée en ce que** le corps de refoulement (33) fait partie intégrale de la broche d'activation (37).

18. Capsule de mélange selon la revendication 16 ou 17, **caractérisée en ce qu'**un point destiné à la rupture est prévu entre le corps de refoulement (33) et la broche d'activation (37).

19. Capsule de mélange selon l'une des revendications 1 à 18, **caractérisée en ce qu'**un évidement (41) qui sert de guidage à la broche d'activation (37) est prévu sur le fond (45) du corps de refoulement (33).

20. Capsule de mélange selon l'une des revendications 1 à 19, **caractérisée en ce que** le corps de refoulement (33) est un corps creux ou un corps plein avec un fond plat (45).

21. Capsule de mélange selon l'une des revendications 1 à 20, **caractérisée en ce que** le dispositif d'activation est un autre piston qui est translatable dans le sens axial dans le piston (15).

22. Procédé pour activer une capsule de mélange (11) qui reçoit au moins deux constituants d'un mélange à plusieurs constituants, procédé pour lequel un premier constituant d'un mélange à plusieurs constituants stocké dans une première chambre (35) est amené à un second constituant du mélange à plusieurs constiutants par translation d'une pièce d'activation (33),
une douille (53) qui coopère avec la pièce d'activation (33) étant placée sur la capsule de mélange (11), douille qiu est guidée mobile sur la capsule de mélange (11) de telle manière que la pièce d'activation (33) est translatée de manière forcée lorsque l'on enlève la douille (53),
**caractérisé en ce**
**que** la douille (53) doit être déplacée en avant et en arrière par rapport à la capsule de mélange (11) le long d'une glissière de guidage (57) en forme d'U ou de V dans un dispositif d'activation (69).
